# EUROPÄISCHE PATENTANMELDUNG

(11) **EP 4 807 258 A1**
(43) Veröffentlichungstag der Anmeldung: **16.09.2026**
(21) Anmeldenummer: 26162528.9
(22) Anmeldetag: 05.03.2026
(51) Int. Cl.: F24D 3/00, F24D 5/00, F24D 5/02, F24S 10/20, F24S 40/60, F24S 90/00, F24S 10/30

(54) **SOLARTHERMISCHE ANLAGE UND VERFAHREN ZUM BETREIBEN DER ANLAGE**

(30) Priorität: 11.03.2025 DE 102025109129
(71) Anmelder: Benecke, Martin, 14913 Niedergörsdorf (DE)
(72) Erfinder: Benecke, Martin, 14913 Niedergörsdorf (DE)
(74) Vertreter: Schoenen, Norbert

(57) **Zusammenfassung**

Die solarthermische Anlage mit einem Solarkollektor (1),
mindestens einem Wärmeträgermedium, welches Kanäle des Solarkollektors (1) durchströmt, und mit einem mit dem Solarkollektor (1) zum Kreislauf verbundenen Wärmetauscher (6), wobei ein erster Kreislauf mit einem flüssigen Wärmeträgermedium, insbesondere Wasser mit oder ohne Zusätzen, und ein zweiter Kreislauf mit einem gasförmigen Wärmeträgermedium, insbesondere Luft, vorgesehen sind, und wobei der Betrieb der Anlage in Abhängigkeit vom Wärmebedarf und von der Verfügbarkeit der Solarenergie von dem einen Kreislauf auf den anderen Kreislauf umschaltbar ist, ist dadurch gekennzeichnet, dass der erste und der zweite Kreislauf miteinander verbunden sind und Ventile (11) oder Hochpunkte (14) aufweisen, dass beide Kreisläufe an dieselben Kanäle des Solarkollektors (1) angeschlossen sind und dass bei druckloser Anlagenauslegung die Hochpunkte (14) so angeordnet sind sowie dass bei druckbeaufschlagter Anlagenauslegung die Ventile (11) so steuerbar sind, dass im Betrieb durch dieselben Kanäle des Solarkollektors (1) entweder das flüssige oder das gasförmige Wärmeträgermedium strömt.

## Beschreibung

Die Erfindung betrifft eine solarthermische Anlage mit einem Solarkollektor (1), mindestens einem Wärmeträgermedium, welches Kanäle des Solarkollektors (1) durchströmt, und mit einem mit dem Solarkollektor (1) zum Kreislauf verbundenen Wärmetauscher (6), wobei ein erster Kreislauf mit einem flüssigen Wärmeträgermedium, insbesondere Wasser mit oder ohne Zusätzen, und ein zweiter Kreislauf mit einem gasförmigen Wärmeträgermedium, insbesondere Luft, vorgesehen sind, und wobei der Betrieb der Anlage in Abhängigkeit vom Wärmebedarf und von der Verfügbarkeit der Solarenergie von dem einen Kreislauf auf den anderen Kreislauf umschaltbar ist.

### Hintergrund

Die Erfindung betrifft die Erzeugung von Wärmeenergie in einer solarthermische Anlage, welche mit verschiedenen Wärmeträgermedien betrieben wird. Die Wärmeenergie soll u.a. zum Heizen, zur Brauchwasseraufbereitung und/oder zur Bereitstellung von Prozesswärme genutzt werden.

### Stand der Technik

Bei den bekannten Verfahren/Anlagen treten im Gegensatz zur Erfindung die folgenden Probleme auf:

### Abschnitt I (Auslegung der solarthermischen Anlage)

Solarthermische Anlagen zur Gebäudeheizung und Brauchwasseraufbereitung werden üblicherweise mit dem Wärmeträgermedium Wasser bzw. einem Gemisch aus Wasser und einem Frostschutzmittel (z.B. Glykol) betrieben. Die gängigen Kollektoren (Absorber) der solarthermischen Anlagen werden entweder von diesem Wärmeträgermedium direkt durchströmt und nehmen die absorbierte Strahlungsenergie in Form von Wärme auf oder es ist ein zusätzlicher Kältemittelkreislauf zwischen Absorber und Anlagenkreislauf geschaltet. Zudem werden in seltenen Fällen auch gasförmige Wärmeträgermedien, wie z.B. Luft, verwendet, die jedoch aufgrund der geringen Dichte und Wärmekapazität der Luft und der damit verbundenen Nachteile eher selten anzutreffen sind.

Insbesondere in nördlichen Breiten, z.B. in Deutschland, ergibt sich aufgrund der jahreszeitbedingten Sonnenstände und der Bewölkung eine ungünstige Konstellation zwischen Wärmebedarf und Sonnen- bzw. Strahlungsangebot. Im Sommer besteht ein ausreichendes Angebot an Strahlung, während kein Wärmebedarf zum Heizen von Gebäuden besteht und ein nur geringer Wärmebedarf bei der Brauchwasseraufbereitung. In den Übergangsjahreszeiten und insbesondere im Winter liegt ein geringes Strahlungsangebot vor, während ein hoher Bedarf an Wärme zum Heizen und Brauchwasser besteht.

Die bedarfsgerechte Auslegung von solarthermischen Anlagen entsprechend der im obigen Abschnitt beschriebenen Situation würde entweder zu einer Überdimensionierung der Kollektorfläche bzw. Anlage im Sommer führen oder zu einer Unterdimensionierung der Anlage in den Übergangsjahreszeiten bzw. im Winter.

Eine Unterdimensionierung der Anlage führt zu einem Mangel an Wärmeenergie in den Übergangsjahreszeiten sowie im Winter, wodurch andere Energiequellen zum Heizen etc. genutzt werden müssen; es entstehen somit unnötige Mehrkosten.

Eine Überdimensionierung der Anlage führt nicht nur direkt zu höheren Anlagekosten, sondern aufgrund des erheblichen Wärmeüberschusses im Sommer auch zu Kosten bei der Anlagenauslegung, zu Problemen bei der Anlagenfahrweise, Temperaturproblemen beim Anlagenbetrieb wie z.B. Auskochen der Anlage, Alterung des Wärmeträgers, Dampfblasenbildung mit Blockade der Anlage, zu Dampf- und Kondensationsschlägen, Temperaturschocks für Pumpen und Rohrleitungen etc.

Je nach Anlagentyp und Kollektor können diese Probleme kombiniert auftreten und die Lebensdauer der Anlage erheblich reduzieren sowie den Serviceaufwand in die Höhe treiben.

Die im obigen Abschnitt beschriebene Situation führt in aller Regel zur Wahl der Unterdimensionierung der Anlage. Für Privathaushalte und kleinere öffentliche Gebäude ohne ganzjährig zur Verfügung stehende Wärmesenke (wie z.B. Schwimmhallen) werden daher üblicherweise Anlagen zur Brauchwasseraufbereitung und zur Zusatzheizung gebaut. Eine Anlagenauslegung auf den Bedarf in den Übergangsjahreszeiten sowie den Winter findet selten bis gar nicht statt, obwohl moderne Vakuumröhrenkollektoren auch im Winter einen Wirkungsgrad oberhalb 70% aufweisen und somit auch bei ungünstigen Sonnenständen und kurzer Sonnenscheindauer einen nennenswerten Ertrag liefern können. Auch ist dies bemerkenswert, da die Herstellungskosten von modernen Vakuumröhrenanlagen bereits erheblich gesunken sind.

Neben der Auslegung im Hinblick auf den Wärmebedarf sowie die Wärmeverfügbarkeit ergeben sich je nach Anlagenmedium auch Probleme bzgl. des Frostschutzes im Winter. Hierdurch entstehen, je nach Volumina des Wärmeträgermediums, erhebliche Kosten.

Nun folgend werden die Probleme von gängigen Wärmeträgern in Bezug auf die oben dargelegte Situation beschrieben:
1. Beim Betrieb von solarthermischen Anlagen mit gasförmigen Wärmeträgermedien (üblicherweise Luft) besteht in den Übergangsjahreszeiten das Problem des Wärmetransports aufgrund der geringen Wärmekapazität sowie Dichte des Mediums. Um das teilweise noch hohe Wärmeangebot in ein Gebäude zu transportieren, werden hohe Volumenströme benötigt. Hierdurch müssen die Rohrleitungsquerschnitte sehr groß dimensioniert werden, der Wärmetransport über längere Strecken ist aufwändig, was zu zusätzlichen Kosten führt, während hohe Strömungsgeschwindigkeiten zu Kosten bei den Gebläsen und zu Geräuschemissionen führt.

Während das direkte Einbringen der Warmluft zum Heizen einfacher ist als bei Wassersystemen, stellt die Verteilung innerhalb eines Gebäudes aufgrund der Rohrleitungsquerschnitte ein Problem dar. Weiterhin werden in Luftsystemen zusätzliche groß bauende Wärmetauscher benötigt, um das Brauchwasser zu erwärmen. Der Betrieb im Sommer sowie im Winter lässt sich mit Luft als Wärmeträger gut bewerkstelligen, da im Winter das Wärmeangebot geringer ist, kein Einfrieren des Mediums stattfinden kann und im Sommer das Auskochen des Mediums, Kondensationsschläge und Temperaturschocks keine Rolle spielen.

2. Beim Betrieb von solarthermischen Anlagen mit flüssigen Medium (üblicherweise Wasser-Glykol-Gemischen) bestehen im Sommer, wie oben beschrieben, die Problematik des Auskochens, insbesondere bei drucklos betriebene Anlagen. Die Möglichkeit, den Absorber abzudecken, besteht aufgrund der Installation auf dem Dach üblicherweise nicht oder müsste täglich automatisch nach Bedarf stattfinden, was kostenintensiv ist. Bei druckbeaufschlagten Anlagen kommt es zu einer hohen Temperatur- und Druckbelastung von Anlagenteilen und Kühlmedien sowie zu Temperaturschocks beim Anfahren nach Stillstandszeiten bzw. nach thermischer Stagnation. Oft kommt es zur kompletten Abschaltung der Anlage bzw. zur erzwungenen Außerbetriebnahme, ein Wiederanfahren ist dann erst nach Abkühlung wieder möglich, selbst wenn eine Wärmesenke bzw. ein Bedarf zur Verfügung stehen sollte. Hierfür sind oft lange Wartezeiten nötig, um keine Temperaturschocks in der Anlage zu erzeugen.

Um der beschriebenen Situation zu begegnen, werden oft die oberen Grenzwerte bei Puffer- und Brauchwasserspeichern erhöht, was u.a. zum Risiko des Verbrühens mit Brauchwasser führt und die Belastung von Komponenten und Heizungssystemen erhöht. Teilweise werden nachts im Sommer Heizungen zwangsbetrieben, um die überhitzen Solarkreisläufe wieder abzukühlen. In häufigen Fällen kommt es zur dauerhaften Abschaltung der Anlage mit Abdeckung der Kollektoren, weil der Aufwand den Nutzen übersteigt.

Obwohl moderne Vakuumröhrenanlagen auch Temperaturen bis zu 220 °C erreichen können, werden in Anlagen mit dem Wärmeträgermedium Wasser nur Medientemperaturen unterhalb 100 °C bereitgestellt. Eine Bereitstellung von Prozesswärme mit Temperaturen zwischen 150 °C und 200 °C würde zu deutlich höheren Anlagekosten führen.

### Abschnitt II (Effizienz der solarthermischen Anlage)

Solarthermische Anlagen zur Gebäudebeheizung und Brauchwasseraufbereitung werden üblicherweise mit dem Wärmeträgermedium Wasser bzw. einem Gemisch aus Wasser und einem Frostschutzmittel (z.B. Glykol) betrieben. Die gängigen Kollektoren (Absorber) der solarthermischen Anlagen werden entweder von diesem Wärmeträgermedium direkt durchströmt und nehmen die absorbierte Strahlungsenergie in Form von Wärme auf oder es ist ein zusätzlicher Kältemittelkreislauf zwischen Absorber und Anlagenkreislauf geschaltet. Zudem werden in seltenen Fällen auch gasförmige Wärmeträgermedien wie z.B. Luft verwendet. Aufgrund der geringen Wärmekapazität der Luft werden diese eher für kleine Anwendungsfälle verwendet.

Der Wirkungsgrad des Kollektors der solarthermischen Anlage wird hauptsächlich durch sein Vermögen bestimmt, die Strahlung zu absorbieren und in Wärme umzuwandeln sowie durch sein Vermögen, einen möglichst großen Anteil der Wärme an das Wärmeträgermedium zu übergeben und einen möglichst geringen Anteil an die Umgebung durch Konvektions- und Strahlungsverluste.

Der Wirkungsgrad der Gesamtanlage hängt jedoch nur teilweise vom Kollektorwirkungsgrad ab. Insbesondere in den Bedarfsmonaten (Winter und Übergangsjahreszeiten) spielen die Wärmeverluste der Gesamtanlage eine größere Rolle, wodurch der Anteil der nutzbaren Wärme deutlich sinkt. Der Anlagenwirkungsgrad ist dann häufiger von der Fahrweise, dem Wärmeträgermedium und Art bzw. Anordnung der Gesamtanlage selbst abhängig.

Beispiel 1: Ein Kollektor erwärmt das Anlagenmedium (Wasser) an einem Tag von 10 °C auf 25 °C, da nur während zwei Stunden die Sonne schien. Die vorhandenen Verbraucher (Wärmesenken) sind bei 25 °C nicht in der Lage, eine Wärmeabgabe vom Medium an das Gebäude oder den noch mitteltemperierten Brauchwasserspeicher zu vollziehen. In der Nacht kühlt sich das Anlagenmedium sowie die Rohrleitungen, durch Wärmeverluste an die Umgebung, wieder von 25 °C auf 10 °C ab. Am nächsten Tag beginnt dieselbe Situation erneut.

Das Beispiel zeigt, dass trotz eines hohen Kollektorwirkungsgrades (z.B. > 70% bei Vakuumröhrenkollektoren) sowie ausreichender Sonneneinstrahlung auch ein annähernd 0%iger Anlagenwirkungsgrad bzw. Nutzungsgrad die Folge sein kann. Tatsächlich ist dies der häufigste Fall bei gängigen Anlagen in den Übergangsjahreszeiten und in den Wintermonaten. Die Mehrzahl der Anlagen ist nicht in der Lage, die absorbierte Sonnenenergie in Nutzenergie umzuwandeln.

Beispiel 2: Ein Kollektor erwärmt das Anlagenmedium (Luft) am Tag von 10 °C auf 60 °C nach bereits 15 Minuten. Bei einer Sonnenscheindauer von zwei Stunden kann diese Luft direkt zur Gebäudeheizung über einen Zeitraum von 1,75 Stunden eingesetzt werden. Das Anlagenmedium Luft kühlt sich in der Nacht bereits nach kurzer Zeit auf 10 °C ab, der Wärmeverlust an die Umgebung ist minimal.

Dieses Beispiel zeigt, dass auch bei einer geringen Sonnenscheindauer bereits ein hoher Anlagenwirkungsgrad erzielt werden kann, wenn das notwendige Temperaturniveau zur Wärmeabgabe erreicht ist.

Es zeigt sich weiterhin, dass je nach Jahreszeit und Energiebedarf unterschiedliche Vor- und Nachteile bei der Verwendung von unterschiedlichen Wärmeträgermedien bestehen.

Der Wirkungsgrad der Gesamtanlage hängt im Besonderen in den Bedarfsmonaten neben dem Kollektorwirkungsgrad u.a. von folgenden Größen ab:
- der Wärmekapazität und Dichte des Wärmeträgermediums
- der Gesamtmasse des Wärmeträgermediums und der Anlagenteile
- der Masse des Wärmeträgermediums, die sich außerhalb des Gebäudes befindet
- dem erforderlichen Temperaturniveau der Wärmeabgabe (Mitteltemperatur-Wärmesenke wie Wandheizkörper oder Niedertemperatur-Wärmesenke wie Fußbodenheizung)
- der Anlagenfahrweise und der dadurch bedingten Wärmeverluste (z.B. Dauerbetrieb oder unterbrochener Betrieb)
- der Verfügbarkeit einer Prozesswärmesenke
- der Speichergröße (Brauchwasser, Puffer- und andere Speicher).

Bekannt sind außerdem die folgenden Druckschriften DE 94 10 207 U1, CN 1 04 913 543 A, DE 196 54 037 C1, DE 25 25 723 A1, CN 1 05 387 509 A, JP H07 - 324 759 A.

Der Anspruch 1 geht von der DE 94 10 207 U1 aus.

Allerdings unterscheiden sich die vom Erfinder verwendeten Vakuumröhren jedoch erheblich von den in CN 1 04 913 543 A verwendeten Vakuumröhren, wodurch deutliche funktionale Vorteile entstehen. Die in CN 1 04 913 543 A verwendeten Vakuumröhren sind komplett ungeeignet für die erfindungsgemäße Anlagenfahrweise und machen die Verwendung von Kompressoren für die Druckluftkühlung notwendig, wodurch ein sehr hoher Stromverbrauch für die Zirkulation des Kühlmittels entsteht. Weiterhin muss bei den in CN 1 04 913 543 A verwendeten Vakuumröhren eine zusätzliche U-Leitung in die Röhre eingebracht werden, um den Luftstrom hinein- und wieder herauszuführen, was die ganze Konstruktion außerordentlich teuer macht.

Im Gegensatz dazu verwendet die vom Erfinder erstellte Anlage nur Ventilatoren bzw. Niederdruckgebläse und benötigt keine zusätzlichen Rohrleitungen.

### Aufgabe und Lösung der Erfindung

Aufgabe der Erfindung: Es sollen die oben genannten Nachteile des Standes der Technik vermieden werden.

Diese Aufgabe wird bei einer solarthermischen Anlage und einem Verfahren zum Betreiben der Anlage der eingangs genannten Art erfindungsgemäß dadurch gelöst, dass der erste und der zweite Kreislauf über die Röhren des Solarkollektors (1) miteinander verbunden sind, wobei beide Kreisläufe entweder mittels Hochpunkt (14) oder mittels Ventile (11) so voneinander getrennt sind, dass das Medium Wasser nicht in den Luftkreislauf gelangen kann. Im Anlagenbetrieb kann so wahlweise das flüssige Wärmeträgermedium oder das gasförmige Wärmeträgermedium durch dieselben Kanäle der Vakuumröhren strömen.

### Technische Unterschiede zum Stand der Technik

Der wichtigste technische Unterschied zu den oben genannten Dokumenten besteht in der Verwendung von beidseitig geöffneten Vakuumröhren mit großen Strömungsquerschnitten für den Zweimedienbetrieb.

Ein weiterer sehr wichtiger technischer Unterschied zu den oben genannten Dokumenten besteht in der drucklosen Fahrweise beider Medien (Luft wie auch Wasser) im miteinander verbundenen Luft- wie auch Wasserkreislauf.

Durch die Kombination dieser technischen Unterschiede mit den bereits bekannten Fahrweisen bzw. Schaltungen werden sämtliche Vorteile sowie zusätzliche Vorteile mit einer einzigen Anlage erreicht, welche durch die Techniken nach den oben genannten Dokumenten einzeln nicht erreicht werden können.

Die vom Erfinder verwendeten Vakuumröhren sind beidseitig geöffnet und nicht wie in CN 1 04 913 543 A unten geschlossen. In den beidseitig geöffneten Vakuumröhren strömt das Medium (Luft oder Wasser) direkt durch die innere Glasröhre ohne zusätzlichen Kühlkreislauf bzw. "heat pipes", während in CN 1 04 913 543 A die Kühlmedien durch zusätzlich eingefügte Röhren geführt werden. Zudem wird in CN 1 04 913 543 A auch keine Luft durch die Röhren innerhalb der Vakuumröhre geführt.

Die vom Erfinder verwendeten Vakuumröhren sind beidseitig geöffnet und lassen sich daher vollständig entleeren. Die in CN 1 04 913 543 A verwendeten Vakuumröhren sind unten geschlossen und lassen sich nicht entleeren, auch nicht die in den Röhren enthaltenen U-Rohre.

Der vom Kühlmedium durchströmte Querschnitt entspricht dem Innenquerschnitt der inneren Glasröhre (der doppelwandigen Vakuumröhre).

Hierdurch ergeben sich die folgenden Vorteile:
- Der freie Querschnitt ist deutlich größer, was im Besonderen beim Luftbetrieb zu deutlich geringeren Druckverlusten führt.
- Für den Luftbetrieb genügen Ventilatoren oder Niederdruckgebläse anstatt einer Wärmepumpe mit Kältemittel zur Kühlung der nicht beschichteten Vakuumröhre, die zur thermischen Isolation dient (siehe Nr. 11 in CN 1 04 913 543 A).
- Eine preiswerte Konstruktion ohne zusätzliche Innenrohre ergibt sich.
- Durch die Möglichkeit der Entleerung der Vakuumröhren können Dampfschläge, Auskochen im Wasserbetrieb und Stillstand verhindert werden. Weiterhin werden hierdurch die Wärmeverluste im Stillstand nachts verringert und Vereisungsprobleme im Winter/Stillstand verhindert.

Die vom Erfinder beschriebene Anlage grenzt sich zu CN 1 04 913 543 A auch dadurch ab, dass eine mit einem mehrschichtigen Absorbermaterial bedampfte Vakuumröhre (äußere Röhre durchsichtig, innere Röhre bedampft) zur direkten Wärmegewinnung verwendet wird. Im Gegensatz dazu wurde in CN 1 04 913 543 A eine Vakuumröhre verwendet, bei welcher die Innenröhre und Außenröhre durchsichtig sind, während sich im Inneren ein Photovoltaik-Kollektor befindet, dessen überschüssige Wärme zum Heizen verwendet wird. In diese durchsichtige Vakuum-Doppelröhre wurden in CN 1 04 913 543 A zwei separate Kühlkreisläufe für Wasser (mittels heat pipe Wärmeabfuhr) und Luft eingebaut.

Weiterhin hat der Erfinder einen weiteren Vorteil des Anlagenaufbaus erreicht: Durch den erfindungsgemäßen "drucklosen Betrieb" ergibt sich ein erheblicher Vorteil, welcher im Vergleich zu DE 94 10 207 U1 und CN 1 04 913 543 A deutlich wird. Während in DE 94 10 207 U1 und CN 1 04 913 543 A nicht zuletzt aufgrund der Druckverhältnisse eine Abgrenzung der Kühlkreisläufe notwendig ist, entweder durch separate Kreisläufe oder durch druckdichte Armaturen, genügt bei der erfindungsgemäßen Bau- und Fahrweise eine Abgrenzung durch eine Siphonanordnung oder entsprechend Bauteil 14 einen Hochpunkt, um ein Überlaufen des Wassers in den Luftkreislauf zu verhindern.

Denn in DE 94 10 207 U1 wird die Wärme zwar mittels Luft oder Wasser abgeführt, jedoch werden unterschiedliche Kreisläufe verwendet. Im Gegensatz dazu wird in der erfindungsgemäßen Anordnung die Röhre selbst von beiden Medien direkt durchströmt und die Kreisläufe sind zueinander offen (Abgrenzung durch Hochpunkt).

Ein weiterer Vorteil der Erfindung: Bei Schneefall und im Besonderen nach angetautem und wieder gefrorenem Schnee sind die meisten Solaranlagen dauerhaft mit Schnee bedeckt und lassen sich auch mit einem Besen nicht vom Schnee befreien, da die Schnee/Eisschicht festgefroren ist. Wenn nun Sonneneinstrahlung vorherrscht, wird diese größtenteils vom Schnee reflektiert. Im Gegensatz dazu genügt bei Luftbetrieb bereits die Sonneneinstrahlung bei Röhren, um eine nennenswerte Erhöhung der Innentemperatur zu erreichen; die Verlustwärme genügt dann, um die Röhren von selbst abzutauen. Bei einfachem Wasserbetrieb genügt dies nicht und die Röhren bleiben vereist, da das Wasser (bzw. Wasser mit Frostschutzmittel) sich nicht nennenswert erwärmt, um ein Abtauen zu ermöglichen. Dies gilt ebenso für Flachkollektoren.

Man könnte natürlich einen Abtaubetrieb mit einem Zusatzheizer durchführen, aber auch hier würde der Energieaufwand für Anlagen mit Wasser erheblich größer sein als für Anlagen mit Luft.

### Vorteile der Erfindung

Unter anderem werden die folgenden Vorteile erreicht:
1) Die solarthermische Anlage kann je nach Wärmebedarf und je nach Verfügbarkeit der Solarenergie mit einem gasförmigen oder einem flüssigen Wärmeträgermedium betrieben werden. Dies wird im weiteren Text als dualer Betrieb bzw. duale Fahrweise bezeichnet. Hierdurch können die Vorteile des jeweiligen Mediums entsprechend der jeweilig vorherrschenden Bedingungen genutzt werden.

Die solarthermische Anlage ist so ausgelegt, dass der Kollektor mit dem Wärmeträgermedium Luft wie auch mit dem Wärmeträgermedium Wasser betrieben werden kann. Hierzu hat die Anlage einen Luft- sowie einen Wasserkreislauf, während der Kollektor entweder mit dem einen Kreislauf oder dem anderen Kreislauf verbunden ist. Der Luftkreislauf ist durch seine Anordnung oder durch eine Absperrung vom Wasserkreislauf in der Art getrennt, dass das Wärmeträgermedium Wasser nicht in den Luftkreislauf gelangen kann. Der Kollektor ist so ausgelegt, dass mit den Volumenströmen der jeweiligen Wärmeträgermedien die anfallenden Energiemengen abgeführt werden können.

Der Wasserkreislauf ist so angeordnet, dass eine vollständige Entleerung des Kollektors bis zu den Kreislaufgrenzen in einen Speicher ermöglicht wird. Die Entleerung kann entweder durch die geeignete geodätische Anordnung stattfinden oder durch eine Fördereinrichtung (z.B. Pumpe) erfolgen. Der Speicher ist so ausgelegt, dass er das Volumen des Wärmeträgermediums aus dem Kollektor aufnehmen kann. Danach kann auf den Betrieb mit dem Wärmeträgermedium Luft umgeschaltet werden. Vor dem erneuten Betrieb mit dem Wärmeträgermedium Wasser wird der Kollektor je nach Kollektortyp einerseits erst kaltgefahren und dann mit Wasser befüllt. Ist der Wasserkreislauf geschlossen ausgelegt, kann durch geeigneter Wahl der Pumpe der Anlagendruck mit der Nullförderhöhe der Pumpe aufgeprägt werden.

2) Die solarthermische Anlage kann auf den winterlichen Wärmebedarf ausgelegt und somit überdimensioniert werden, ohne dass es in den Sommermonaten zu Problemen wie Dampfblasenbildung, Kondensationsschlägen, Anlagenstillstand oder dem Auskochen der Anlage kommt.

Wenn im Sommer keine Wärmesenke zur Verfügung steht, wird der Kollektor vollständig entleert und mit dem Wärmeträgermedium Luft durchströmt. Die Luft kann hierbei direkt an die Umgebung abgegeben werden, um die Anlagentemperatur zu senken und die Temperaturbelastung der Anlage zu reduzieren. Sollte die Anlage im Stillstand betrieben werden, führt dies auch nicht zum Auskochen der Anlage, da ein Wärmeeintrag in den Wasserkreislauf nicht stattfindet; der Kollektor steht dann trocken im Stillstand.

Hierdurch ist eine Überdimensionierung der Gesamtanlage sowie eine Auslegung auf den Bedarf in den Übergangsjahreszeiten möglich und gleichzeitig der Wärmeabtransport in den Sommermonaten gewährleistet.

3) Solarthermische Anlagen mit dem Wärmeträgermedium Wasser nach dem Stand der Technik geben im Stillstand, aufgrund des hohen Energiespeichervermögens des Wasser, insbesondere nachts, weiter Energie an die Umgebung ab.

Die hier beschriebene Anlage und duale Fahrweise verhindert den Energieverlust zwischen Wärmeträgermedium und Umgebung in Zeiten des Anlagenstillstands. Hierdurch werden auch die Aufheizzeiten am nächsten Tag, nach dem Wiederanfahren der Anlage, verkürzt.

In Zeiten des Anlagenstillstands, wie z.B. nachts, wird das Wärmeträgermedium Wasser aus dem Kollektor und den außenliegenden Anlagenteilen in einen Speicher entleert, der sich innerhalb des zu beheizenden Gebäudes bzw. Objektes befindet. Sämtliche Energie, die im Anlagenstillstand vom Wärmeträgermedium abgegeben wird, wird nun dem zu beheizenden Gebäude bzw. Objekt zugeführt.

4) Die solarthermische Anlage kann, trotz der Verwendung von Wasser als Wärmeträgermedium der Anlage, ohne Frostschutzmittel im Winter betrieben werden. Auch ein Zwangsumlaufbetrieb bzw. ein zusätzliches Heizen ist zur Verhinderung des Einfrierens nicht notwendig.

Die Anlagenteile, welche sich im von Frost gefährdeten Bereich befinden, werden so angeordnet, dass diese entleerbar sind. In den Übergangsjahreszeiten wie auch im Winter werden diese Anlagenteile nachts entleert, um die nächtlichen Wärmeverluste an die Umgebung zu reduzieren und ein Einfrieren der Anlage bei Frost zu verhindern. Am Tage besteht hierdurch weiterhin die Möglichkeit des Betriebs mit Wasser oder Luft.

5) Die solarthermische Anlage kann Prozesswärme (Heißluft) bis 200 °C zur Verfügung stellen, welche insbesondere im Sommer, z.B. zum Backen (Anwendung im Umluftofen) oder in Wäschetrocknern, verwendet werden kann. Auch kann der Direktbetrieb einer Haussauna im Sommer wie im Winter erreicht werden. Insbesondere durch die Bereitstellung von Prozesswärme mit einem höheren Temperaturniveau kann im Sommer der Verbrauch an Elektroenergie gesenkt werden sowie der Gesamtnutzungsgrad der solarthermischen Anlage gesteigert werden.

Aufgrund der Auslegung in dualer Fahrweise muss nur der drucklos betriebene Luftkreislauf auf 200 °C ausgelegt werden. Hierdurch führt eine Prozesswärmebereitstellung nicht zu hohen Anlagekosten im Vergleich zu einer Auslegung von Wasserkreisläufen auf 200 °C/15 bar.

Soll die solarthermische Anlage zur Bereitstellung von Prozesswärme verwendet werden, sollten der Luftkreislauf wie auch die anbindenden Komponenten auf eine Temperatur von 200 °C ausgelegt sein. Die Heißluft kann dann möglichen Prozessen bzw. Abnehmern zugeführt werden.

6) Insbesondere in neuester Zeit werden in Gebäuden häufiger Lüftungssysteme eingesetzt, um die Luftqualität zu verbessern sowie die Grenzwerte für die Belüftung einzuhalten. Durch den Einsatz der solarthermischen Anlage mit dem Wärmeträgermedium Luft kann hier ein vorgewärmter Luftwechsel stattfinden.

Der Luftkreislauf der Anlage verfügt über mindestens zwei Ansaugungen und mindestens zwei Ausgänge. Die Ansaugung ist aus der Umgebung möglich sowie auch aus dem zu beheizenden Objekt. Die Luftabgabe geschieht entweder zur Umgebung oder zurück zum Objekt und der jeweiligen temperaturspezifischen Anwendung. Durch diese Anordnung kann vorgewärmte Frischluft in ein Gebäude eingebracht werden oder zu einem anderen Verbraucher.

7) Solarthermische Anlagen mit dem Wärmeträgermedium Wasser können nach einer Stagnation erst nach einer langen Wartezeit wieder in Betrieb genommen werden. Die Anlage mit dualer Fahrweise ermöglicht ein fast unverzögertes Wiederanfahren der Anlage nach einem Stillstand.

Beim Stillstandsbetrieb wird bei dieser Anlage das Wasser entleert. Nach einer Überhitzung bzw. nach einem möglichen Stillstand der Anlage kann diese direkt ohne Wartezeit im Luftbetrieb heruntergekühlt werden. Der unverzögerte Betrieb der Anlage ist dann ohne Wartezeit mit Luft wie auch mit Wasser, nach einer Wiederbefüllung, möglich.

8) Solarthermische Anlagen mit dem Wärmeträgermedium Luft benötigen einen zusätzlichen, groß bauenden Wärmetauscher zur Brauchwassererwärmung. Die hier beschriebene Anlage ermöglicht durch ihre duale Fahrweise eine Brauchwassererwärmung ohne diesen zusätzlichen Wärmetauscher.

Da die beschriebene Anlage ohne den Zusatz von Frostschutzmitteln oder anderen Zusätzen gefahren wird, ist die Direkterwärmung von Brauchwasser im Kollektor möglich. Das Brauchwasser wird in einer ersten Fahrweise in den Kollektor gefüllt, durch den Kollektor zirkuliert oder im Stillstand auf die notwendigen Brauchwassertemperatur erwärmt. Hiernach wird es wieder in den Brauchwasserspeicher entleert. In der zweiten alternativen Fahrweise wird im Wasserbetrieb das Wärmeträgermedium Wasser durch einen Wasser/WasserWärmetauscher zirkuliert, um das Brauchwasser aufzuheizen. Die Wasserkreisläufe und der Kollektor sind bei der ersten Fahrweise entsprechend den Vorgaben für Trinkwassersysteme ausgelegt.

In beiden Fahrweisen ist kein groß bauender Luft-Wasserwärmetauscher nebst Zusatzgebläse notwendig, um das Brauchwasser zu erwärmen.

9) Solarthermische Anlagen, die mit dem Wärmeträgermedium Luft betrieben werden, benötigen einen zusätzlichen Luft/Wasser-Wärmetauscher, um die Wärme einem gängigen Heizungssystem zuzuführen. Die hier beschriebene Anlage ist so angeordnet, dass die Wärmeverteilung gewährleistet ist, ohne einen zusätzlichen Luft/WasserWärmetauscher zu verwenden.

Zur Einsparung eines Luft/Wasserwärmetauschers wird die Luft erstens direkt in ein Gebäude zur Beheizung eingebracht sowie zweitens mit Hilfe von Spaltrohren unterhalb von bestehenden Heizkörpern eines Gebäudeheizungssystems. Die aus den Spaltrohren aufsteigende Luft erhitzt die Raumheizkörper sowie das darin befindliche Wasser. Die Wärme wird dann über das bereits bestehende Gebäudeheizungssystem im Gebäude verteilt, wodurch ein zusätzlicher Wärmetauscher oder die Verlegung von großen Lüftungsleitungen vermieden wird.

Besonders wichtig ist: Die solarthermische Anlage kann je nach Bedarf mit einem gasförmigen oder einem flüssigen Wärmeträgermedium betrieben werden, d. h. mit der sogenannten dualen Fahrweise oder dem dualen Betrieb. Hierdurch können die Vorteile des jeweiligen Wärmeträgermediums entsprechend der jeweilig vorherrschenden Bedingungen und Anforderungen ausgenutzt werden.

Der Erfinder hat bei der Entwicklung der Erfindung die folgenden technischen Schwierigkeiten in nicht naheliegender Weise überwunden.

Bei der Auslegung von drucklosen solarthermischen Vakuumröhrenanlagen auf den winterlichen Bedarf (somit Überdimensionierung der Kollektorfläche) gelangte der Erfinder beim Wärmeträgermedium Wasser im Sommer an die Problematik des Wärme-Überangebots. Dies resultierte wiederkehrend in der Außerbetriebnahme der Anlage sowie in Anlagenschäden.

Im Winter ergab sich fast keine nutzbare Energie aufgrund der langen Aufheizzeiten des Wärmeträgermediums und der nur niedrigen erreichten Medientemperaturen. Nur in den Übergangsjahreszeiten erwies sich Wasser als das optimale Wärmeträgermedium.

Bei der Auslegung von solarthermischen Anlagen auf den winterlichen Bedarf mit dem Wärmeträgermedium Luft konnte der Erfinder in den Übergangsjahreszeiten die anfallende Wärme nicht ausreichend abführen. Die geringe Speicherfähigkeit der Luft aufgrund der geringen Dichte und Wärmekapazität resultierte in hohen Gebläsedurchsätzen, Druckverlusten und großen Rohrleitungsquerschnitten. Auch resultierte dies in einer erheblichen Schallbelästigung.

Jedoch erwies sich das Medium Luft in den Wintermonaten bei geringer Wärmeverfügbarkeit aufgrund der kurzen Aufwärmzeit ideal und auch beim Anlagenstillstand zeigten sich erhebliche Vorteile, da es im Gegensatz zu Wasser quasi kostenfrei dauerhaft zur Wärmeabfuhr zur Verfügung steht.

An der einen oder der anderen Stelle gelangte der Erfinder immer in erhebliche Probleme mit der Verwendung der überschüssigen Energie oder überhaupt mit der Nutzbarmachung von bereits absorbierter Sonnenenergie auf einem ausreichend hohen Temperaturniveau.

Es zeigte sich, dass bei der Auswahl eines geeigneten Kollektor bzw. Röhrentyps die Verwendung von verschiedenen Wärmeträgermedien in ein und demselben Kollektor möglich war. An dieser Stelle gelang der Durchbruch und ein Anlagenkonzept zur dualen Fahrweise konnte erstellt werden. Hierdurch konnte der Nutzungsgrad sowie Wirkungsgrad der Gesamtanlage erheblich gesteigert werden und eine Vielzahl der betrieblichen Probleme wurden beseitigt oder deutlich vermindert.

Vorteilhafte Ausgestaltungen der Erfindung sind in den Unteransprüchen angeführt.

So wird vorgeschlagen,
- dass der Solarkollektor (1) als Vakuumröhrenkollektor ausgestaltet ist und dass die Kanäle des Solarkollektors (1) als beidseitig geöffnete Solarvakuumröhren mit ausreichend großen Strömungsquerschnitten für Gas und für Flüssigkeit ausgebildet sind,
- dass im zweiten Kreislauf ein Niederdruck-Gebläse oder ein Lüfter (7) zum Fördern des Gases angeordnet ist,
- dass die Anlage einen zur Umgebung offenen und daher drucklosen Wasserkreislauf aufweist und dass im Luftkreislauf zwei Hochpunkte (14) in den Rohrleitungen vor und hinter dem Kollektor (1) angeordnet sind, wobei zumindest bis zu diesen Hochpunkten 14 die Rohrleitung wasserdicht ausgelegt ist (Vorteil: Auf eine Trennung durch Absperrventile kann verzichtet werden),
- dass im ersten Kreislauf ein offenes Ausdehnungsgefäß (13) angeordnet ist,
- dass im ersten Kreislauf mit dem flüssigen Wärmeträgermedium ein Speicher (3) mit einer Kapazität angeordnet ist, die eine vollständige Entleerung des Kollektors bis zu den Kreislaufgrenzen in den Speicher ermöglicht,
- dass die Anlage Spaltrohre (15) aufweist, die unterhalb von bestehenden Heizkörpern eines Gebäudeheizungssystems anbringbar sind, und die zum Erhitzen der bestehenden Heizkörper mit der aus den Spaltrohren (15) aufsteigenden Luft ausgelegt sind,
- dass im Luftkreislauf ein Prozesswärmenutzer (16) angeordnet ist,
- dass der Kollektor (1) auf gleicher Höhe oder unterhalb des Speichers (3) angeordnet ist und dass der Speicher (3) mit dem druckseitigen Auslass einer Pumpe (5) verbunden ist, welche saugseitig mit dem Kollektor (1) verbunden ist,
- dass die Anlage im Sommer und Winter überwiegend mit dem gasförmigen Wärmeträgermedium und in den Übergangsjahreszeiten überwiegend mit dem flüssigen Wärmeträgermedium betrieben wird,
- dass im Betrieb mit dem flüssigen Wärmeträgermedium und in Zeiten des Anlagenstillstands, insbesondere nachts, das Wärmeträgermedium aus dem Kollektor und den außenliegenden Anlagenteilen in einen Speicher entleert wird, der sich innerhalb eines zu beheizenden Gebäudes bzw. Objektes befindet,
- dass im Stillstandsbetrieb oder bei Überhitzung das Wasser entleert und die Anlage im Luftbetrieb heruntergekühlt wird.

### Ausführungsbeispiele

Im Folgenden werden mehrere Ausführungsbeispiele der Erfindung anhand von Zeichnungen näher beschrieben. In allen Zeichnungen haben gleiche Bezugszeichen die gleiche Bedeutung und werden daher gegebenenfalls nur einmal erläutert.

Es zeigen
- Figur 1: einen vereinfachten Systemschaltplan einer solarthermischen Anlage, in geschlossener Ausführung mit der Wärmeträgermedium Wasser nach dem Stand der Technik,
- Figur 2: die erfindungsgemäße solarthermischen Anlage, mit dem Wärmeträgermedium Wasser sowie Luft in separaten Kreisläufen, nach einem ersten Ausführungsbeispiel, mit zueinander abgetrennten Kreisläufen,
- Figur 3: die erfindungsgemäße solarthermischen Anlage, mit dem Wärmeträgermedium Wasser sowie Luft in separaten Kreisläufen, nach einem zweiten Ausführungsbeispiel, mit zueinander offenen Kreisläufen,
- Figur 4: die erfindungsgemäße solarthermischen Anlage, mit dem Wärmeträgermedium Wasser sowie Luft in separaten Kreisläufen, nach einem dritten Ausführungsbeispiel mit zueinander offenen Kreisläufen und Spaltrohrverteiler,
- Figur 5: die erfindungsgemäße solarthermischen Anlage, mit dem Wärmeträgermedium Wasser sowie Luft in separaten Kreisläufen, nach einem vierten Ausführungsbeispiel mit zueinander offenen Kreisläufen und Prozesswärmeverbraucher, und
- Figur 6: die erfindungsgemäße solarthermischen Anlage, mit dem Wärmeträgermedium Wasser sowie Luft in separaten Kreisläufen, nach einem Ausführungsbeispiel mit zueinander offenen Kreisläufen und tiefer Anordnung des Kollektors.

### Aufbau und Arbeitsweise der Ausführungsbeispiele der erfindungsgemäßen solarthermischen Anlage bzw. des erfindungsgemäßen Verfahrens

### Ausführungsbeispiel 1

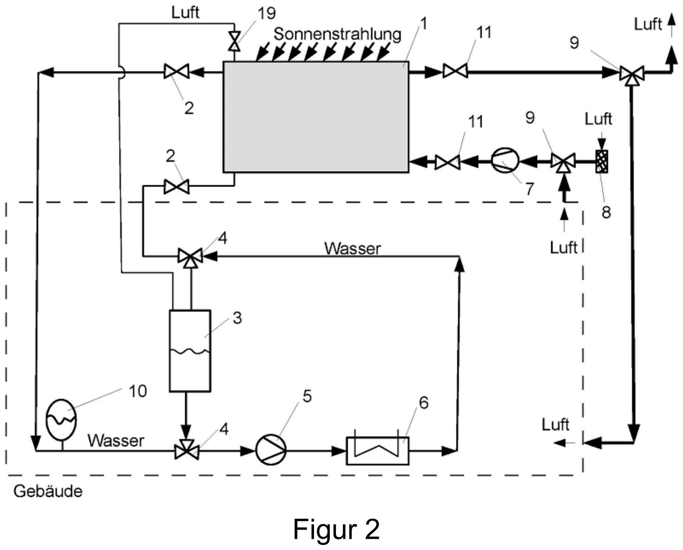

In Figur 2 ist ein erstes Beispiel für die erfindungsgemäße solarthermischen Anlage, mit dem Wärmeträgermedium Wasser sowie Luft in separaten Kreisläufen, mit zueinander abgetrennten Kreisläufen dargestellt.

Die solarthermische Anlage besteht im Wesentlichen aus einem Wasserkreislauf mit Pumpe 5, einem separatem Luftkreislauf mit Gebläse 7 und einem gemeinsam, jedoch abwechselnd genutztem Solarkollektor 1. Die beiden Kreisläufe sind im jeweiligen Betriebszustand, A/B (Wasserbetrieb) und C/D (Luftbetrieb), voneinander durch Absperreinrichtungen bzw. Ventile 2 und 11 abgetrennt. Die Ventile können je nach geplanter Ausführung und Schalthäufigkeit manuell oder mit Antrieben ausgeführt sein.

Im Betriebszustand A sind die Ventile 11 geschlossen und die Ventile 2 geöffnet, während der Kollektor 1 mit Wasser gefüllt ist. In diesem Betriebszustand ist das Gebläse 7 im Luftkreislauf ausgeschaltet, während die Pumpe 5 das Wärmeträgermedium Wasser im Wasserkreislauf durch den Kollektor 1 fördert. In diesem Betriebszustand ist das Entlüftungsventil 19 geschlossen und die Dreiwegeventile 4 sind so geschaltet, dass das Wasser vom Kollektor 1 über den Wärmetauscher 6 und wieder zurück zum Kollektor 1 im Kreislauf gefördert wird. Hierbei nimmt das Wasser die Sonnenstrahlung im Solarkollektor 1 in Form von Wärme auf und gibt diese im Wärmetauscher 6 an einen Verbraucher (z.B. Heizkreislauf oder Brauchwasserkreislauf) wieder ab. Das geschlossene Ausdehnungsgefäß 10 hält den Druck im Wasserkreislauf annährend konstant.

Um in den Betriebszustand C/D (Luftbetrieb) zu gelangen, wird die Pumpe 5 abgeschaltet. Danach werden die Dreiwegeventile 4 in Richtung Speicher 3 umgeschaltet und das Entlüftungsventil 19 geöffnet. Aufgrund der geodätischen Anordnung entleert sich der Kollektor 1 in den Speicher 3, während die Luft aus dem Speicher über das Entlüftungsventil 19 in den Kollektor gelangt. Nach der Entleerung werden die Ventile 2 und das Entlüftungsventil 19 geschlossen. Der Wasserkreislauf befindet sich nun im Stillstand und das Wärmeträgermedium befindet sich im Speicher, der innerhalb des Gebäudes angeordnet ist. Hierdurch die Anlage im Winter, im Stillstand gegen Einfrierung des Mediums geschützt und es treten keine Wärmeverluste nachts vom Wärmeträgermedium an die Umgebung auf. Durch Umschaltung der Dreiwegeventile 4 im Kreislauf zwischen Speicher 3 und Wärmetauscher 6 kann die Pumpe 5 das gespeicherte Medium zusätzlich im Betriebsfall B nutzen. Im Betriebsfall B ist der Kollektor entleert, aber das gespeicherte Wasser kann mit Pumpe 5 noch im Kreislauf über Speicher 3 und Wärmetauscher 6 zirkuliert werden, bis es abgekühlt ist.

Sobald der Kollektor entleert und die Ventile 2 sowie das Entlüftungsventil 19 abgesperrt sind, können die Ventile 11 geöffnet werden, falls der Betriebszustand C/D des Luftkreislaufes gewünscht ist. Dieser Betriebszustand ist in den Wintermonaten bei niedriger Strahlungsintensität effizient, da sich das Wärmeträgermedium Luft aufgrund der geringen Dichte und niedrigen Wärmekapazität deutlich schneller auf ein nutzbares Temperaturniveau aufwärmt als das Wärmeträgermedium Wasser. Im Betriebszustand C erfolgt die Ansaugung im Kreislaufbetrieb aus dem Gebäude über das Dreiwegeventil 9 und das Gebläse 7 in den Solarkollektor 1, wo die Luft erwärmt wird, und zurück über das druckseitige Dreiwegeventil 9 in das Gebäude, wo sich die warme Luft mit der Raumluft mischt und das Gebäude beheizt. Bei Bedarf kann das saugseitige Dreiwegeventil 9 umgeschaltet werden und Frischluft aus der Umgebung ansaugen (optional über einen Luftfilter 8). Hierdurch kann ein Gebäude mit erwärmter Frischluft gelüftet werden.

Im Sommer, wenn wenig oder kein Energiebedarf im Gebäude besteht, kann die Anlage im Verwerfbetrieb D betrieben werden. Im Verwerfbetrieb D ist der Luftkreislauf nicht mit dem Gebäude verbunden. Hierzu saugt das Gebläse 7 die Luft aus der Umgebung an, führt diese durch den Solarkollektor 1, wo sie erwärmt wird, und wieder zurück über das druckseitige Dreiwegeventil 9 in die Umgebung. Der Verwerfbetrieb D sorgt für eine dauerhafte Kühlung des Kollektors 1 und der Anlage, da das Wärmeträgermedium Luft im Gegensatz zu Wasserspeichern in unbegrenzter Menge als Wärmesenke zur Verfügung steht. Hierdurch wird die Überhitzung der Anlage vermieden und die Problematik der Kondensationsschläge und Dampfblasenbildung bzw. Temperaturschocks ausgeschlossen.

Soll der Solarkollektor 1 nach dem Luftbetrieb C/D wieder im Wasserbetrieb A verwendet werden, muss der Kollektor 1 wieder mit Wasser gefüllt werden. Vor dem Füllen wird entweder in der Nacht gewartet, bis der Kollektor 1 abgekühlt ist, um mögliche Temperaturschocks durch das Wasser zu vermeiden, oder der Kollektor 1 kann durch einen kurzzeitig erhöhten Gebläsedurchsatz mit dem Gebläse 7 kaltgefahren werden. Hiernach wird das Gebläse 7 abgeschaltet, die Ventile 11 geschlossen und die Ventile 2 und das Entlüftungsventil 19 geöffnet. Das saugseitige Dreiwegeventil 4 wird zwischen Speicher 3 und Pumpe 5 geschaltet und das druckseitige zwischen Pumpe 5 und Kollektor 1. Die Pumpe 5 wird gestartet und das Wasser aus dem Speicher 3 wird in den Kollektor 1 gepumpt, während der Kollektor 1 über das Ventil 19 in den Speicher 3 entlüftet wird. Nach dem Füllvorgang des Kollektors 1 wird das Entlüftungsventil 19 geschlossen, während die Pumpe 5 dann Wasser aus dem Speicher 3 in das Ausdehnungsgefäß 10 fördert und den Anlagendruck bis zur Nullförderhöhe aufprägt; hiernach wird das saugseitige Dreiwegeventil 4 durchgeschaltet in Richtung von Kollektor 1 zur Pumpe 5. Die Anlage befindet sich nun wieder im Betriebszustand A.

Je nach Bedarf, Tageszeit und Einstrahlungssituation kann die Anlage beliebig in den unterschiedlichen Betriebsweisen im Wasserbetrieb A/B und Luftbetrieb C/D betrieben werden, um die Vorteile des jeweiligen Wärmeträgermediums zu nutzen.

### Ausführungsbeispiel 2

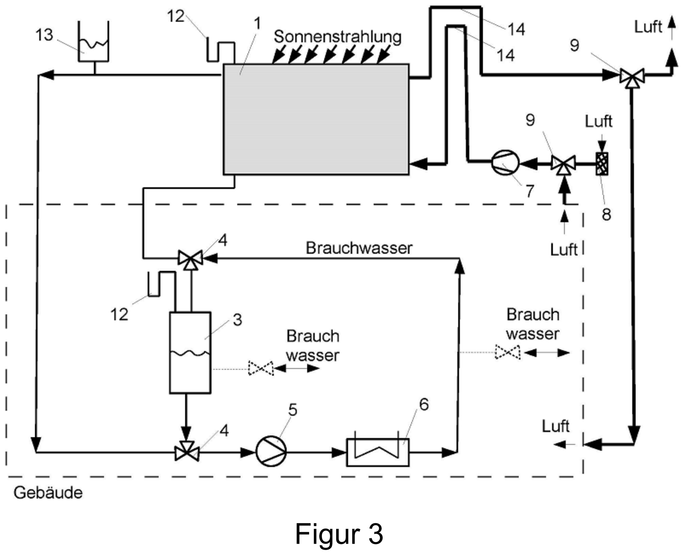

In Figur 3 ist ein Beispiel für die erfindungsgemäße solarthermischen Anlage, mit dem Wärmeträgermedium Wasser sowie Luft in separaten Kreisläufen, nach einem zweiten Ausführungsbeispiel mit zueinander offenen Kreisläufen dargestellt.

Diese Anlagenvariante unterscheidet sich von der geschlossen Anlage in Figur 2 durch einen zur Umgebung offenen und daher drucklosen (nur geodätischer Druck) Wasserkreislauf. Bei dieser Anlagenvariante kann komplett auf eine Trennung durch Absperrventile verzichtet werden, wenn im Luftkreislauf zwei Hochpunkte 14 in den Rohrleitungen vor und hinter dem Kollektor angeordnet sind, bis zu diesen Hochpunkten 14 ist die Rohrleitung wasserdicht ausgelegt. Der Betrieb im Betriebszustand A und B findet entsprechend der Beschreibung zu Figur 2 statt. Beim Entleeren des Kollektors in den Speicher kann auf das Öffnen eines Entlüftungsventils verzichtet werden, da der Wasserkreislauf drucklos ausgeführt ist und über eine Wasserschleife mit der Umgebung verbunden ist, über welche beim Entleeren die Belüftung geschieht. Das Wasser läuft beim Entleeren, analog zur Beschreibung der Figur 2 vom Kollektor 1 in den Speicher 3. Der Speicher 3 ist ebenfalls über eine Wasserschleife 12 mit der Umgebung verbunden und wird bei der Aufnahme des Wassers aus dem Kollektor entlüftet. Bei der offenen Anlagenvariante kann direkt nach dem Entleeren des Kollektors das Gebläse 7 gestartet werden, wodurch sich die Anlage, je nach Stellung der Dreiwegeventile 9, im Luftbetrieb C oder D befindet. Bei der Umschaltung von Luftbetrieb C/D auf Wasserbetrieb A kann, aufgrund der drucklosen Fahrweise, nach dem Füllen auf eine zusätzliche Druckerhöhung verzichtet werden.

Die in Figur 3 dargestellte Anlagenvariante eignet sich aufgrund der unkomplizierten Umschaltvorgänge insbesondere für den häufigen Wechsel der Fahrweisen A/B zu C bzw. C zu A/B. Dies hat Vorteile, wenn man die Anlage zur direkten Brauchwassererwärmung verwenden will. Hierbei ist der gesamte Wasserkreislauf und die angeschlossenen Komponenten als Brauchwasserkreislauf ausgelegt und wird mit Brauchwasser als Wärmeträgermedium betrieben. In der Nacht wird hierbei kaltes Brauchwasser in den Kollektor gefüllt. Zu Beginn des Tages wird die Anlage im Stillstand belassen, bis die gewünschte Brauchwassertemperatur im Kollektor erreicht ist. Hiernach wird das Brauchwasser in den Speicher 3 entleert und kann dann dort direkt zur Nutzung entnommen werden, während der Kreislauf im Betriebszustand B zirkuliert. Da das Brauchwasser direkt im Kollektor erwärmt wird, ist es deutlich früher auf dem gewünschten Temperaturniveau im Vergleich zu Anlagen vom Stand der Technik, da kein zusätzliches Wärmeträgermedium und der Wärmetauscher aufgeheizt werden müssen, sondern das Brauchwasser selbst das Wärmeträgermedium ist.

Nach dem Entleeren des Kollektors 1 kann die Anlage im Luftbetrieb C zur Gebäudeheizung verwendet werden. Nach Abschaltung der Anlage am Abend bzw. bei geringer Sonneneinstrahlung, wird das Brauchwasservolumen vor dem Wiederbefüllen des Kollektors 1 über einen Brauchwasseranschluss ergänzt.

Die in Figur 3 dargestellte Variante ist für drucklose Vakuumröhren geeignet, da das Volumen im Kollektor (bei gängigen Röhren ca. 100 Liter Wasser je 4 m² Kollektor) hoch und somit für den Brauchwasserbedarf geeignet ist. Bei Anlagen mit geringem Volumen an Wärmeträgermedium, z.B. Flachkollektoren mit Spiralrohr, muss das Brauchwasser im Betriebszustand A durch den Speicher 3 zirkuliert werden, anstelle einer Erwärmung im Stillstand. Hierfür ist der Speicher 3 druckseitig der Pumpe 5 anzuordnen, um einen Kreislaufbetrieb zu ermöglichen.

### Ausführungsbeispiel 3

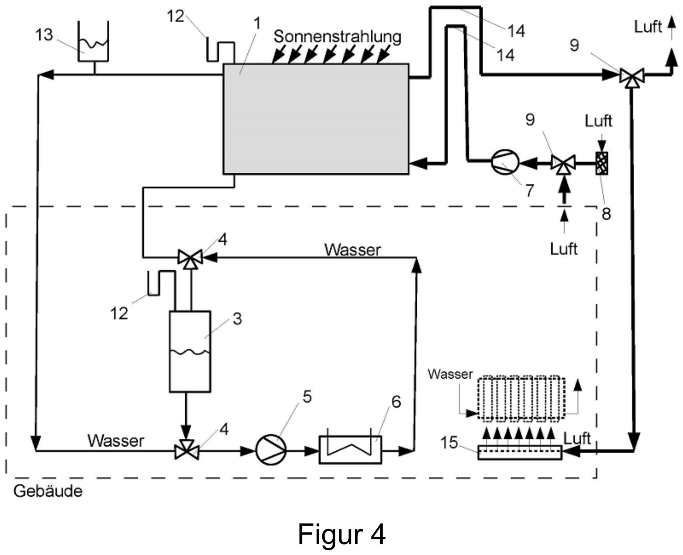

In Figur 4 ist ein Beispiel für die erfindungsgemäße solarthermischen Anlage, mit dem Wärmeträgermedium Wasser sowie Luft in separaten Kreisläufen, nach einem Ausführungsbeispiel mit zueinander offenen Kreisläufen und Spaltrohr-Luftverteiler dargestellt.

Die Anlagenvariante, welche in Figur 4 dargestellt ist, unterscheidet sich von der in Figur 3 dargestellten Anlage durch ein Spaltrohr 15, welches zur Lufteinbringung in das Gebäude im Betriebszustand C verwendet wird. Die Luft wird hier nicht direkt in ein Gebäude geblasen, sondern mittels eines Spaltrohres 15 verteilt. Der Vorteil des Spaltrohres 15 liegt in der Anordnung unterhalb von bestehenden Wandheizkörpern und der Ausbringung von heißer Luft an diesen Heizkörpern. Die Luft wird unterhalb des Heizkörpers über ein Spaltrohr 15 ausgebracht, steigt auf und gibt einen Teil der Wärmeenergie an die bestehenden Heizkörper ab. Die über die Wandheizkörper aufgenommene Energie wird über das vorhandene Heizungssystem (z.B. Gastherme mit Wasserkreislauf) im Gebäude verteilt und über andere Heizkörper abgegeben. Hierdurch kann mehr Heizleistung aus dem Solarkreislauf an wenigen Punkten im Gebäude abgegeben werden, ohne eine ungleichmäßige Beheizung des Gebäudes zu verursachen. Zudem kann aufgrund der höheren Lufttemperatur eine Reduzierung der notwendigen Gebläsedurchsätze des Gebläses 7 erreicht werden.

### Ausführungsbeispiel 4

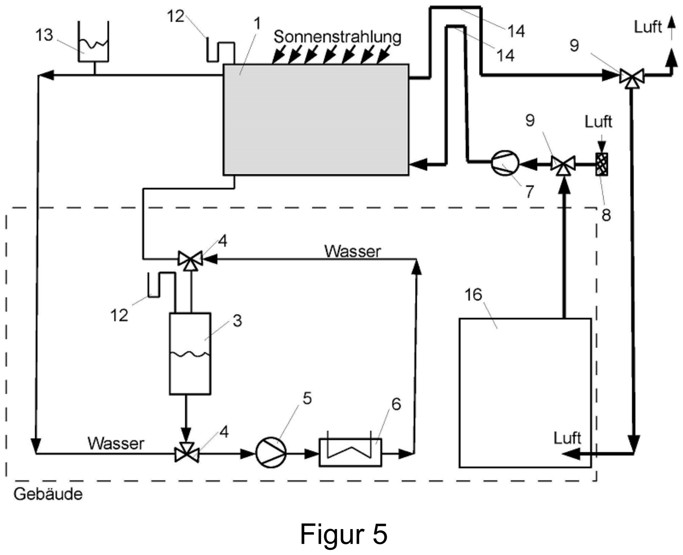

In Figur 5 ist ein Beispiel für die erfindungsgemäße solarthermischen Anlage, mit dem Wärmeträgermedium Wasser sowie Luft in separaten Kreisläufen, nach einem Ausführungsbeispiel mit zueinander offenen Kreisläufen und Prozesswärmeverbrauch dargestellt.

Die Anlagenvariante, welche in Figur 5 dargestellt ist, unterscheidet sich von der in Figur 3 dargestellten Anlage durch einen Prozesswärmenutzer 16. Insbesondere bei Vakuumröhrenanlagen können im Betriebszustand C mit niedrigen Luftdurchsätzen im Sommer auch Lufttemperaturen zwischen 80 °C und 250 °C erreicht werden. Dieser Temperaturbereich eignet sich neben dem Beheizen von Gebäuden auch zu Prozessen wie u.a. Wäschetrockner, Heißluftbackofen oder auch in einer Haussauna. Um diesen Temperaturbereich nutzen zu können, ist der Luftkreislauf auf die gewünschte Temperatur des Prozesswärmenutzers 16 (z.B. 180 °C) ausgelegt.

Der besondere Vorteil der Anlage besteht in der Erhöhung des Nutzungsgrades der Gesamtanlage im Vergleich zu gängigen Anlagen und zu den Anlagevarianten, die in Figur 2, 3 und 4 beschrieben wurden. Der Prozesswärmenutzer 16 kann die Wärmeenergie im Sommer nutzen, wenn eine Brauchwasser- und Heizenergienutzung nicht gefordert ist und gängige Anlagen entweder im Stillstand betrieben werden oder im Verwerfbetrieb D arbeiten. Je nach Prozesswärmenutzer kann hierdurch eine erhebliche Reduktion des Verbrauchs an elektrischer Energie erreicht werden.

### Ausführungsbeispiel 5

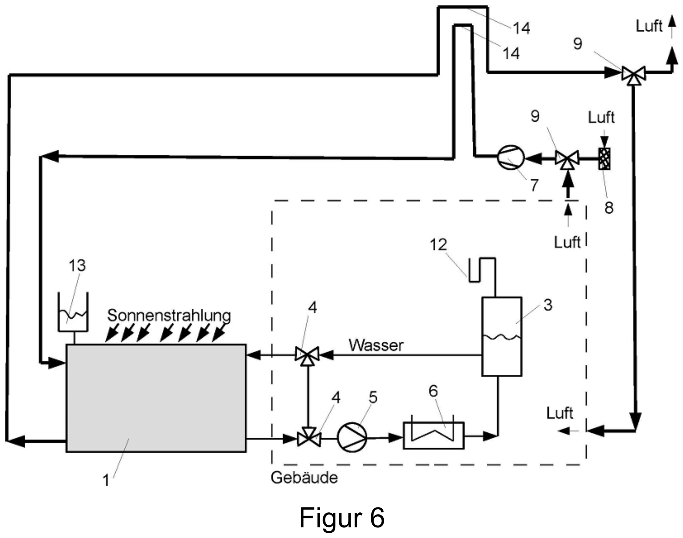

In Figur 6 ist ein Beispiel für die erfindungsgemäße solarthermischen Anlage, mit dem Wärmeträgermedium Wasser sowie Luft in separaten Kreisläufen, nach einem Ausführungsbeispiel mit zueinander offenen Kreisläufen und tiefer Anordnung des Kollektors 1 dargestellt.

Sollte aus unterschiedlichen Gründen eine Anordnung des Kollektors 1 geodätisch oberhalb des Speichers 3 nicht möglich sein, ist der Entleerungsvorgang des Kollektors 1 vor dem Umschalten der Anlage aus Betriebszustand A nach Betriebszustand C mit Hilfe der Pumpe 5 durchzuführen. Hierbei ist der Speicher 3 wie dargestellt druckseitig der Pumpe 5 angeordnet, um ein Fördern vom Kollektor 1 in den Speicher 3 zu ermöglichen. Die Schaltvorgänge entsprechen ansonsten den zu Figur 3 beschriebenen Handlungen.

### Vergleichsbeispiel:

### Aus dem Stand der Technik bekanntes Verfahren / bekannte Anlage:

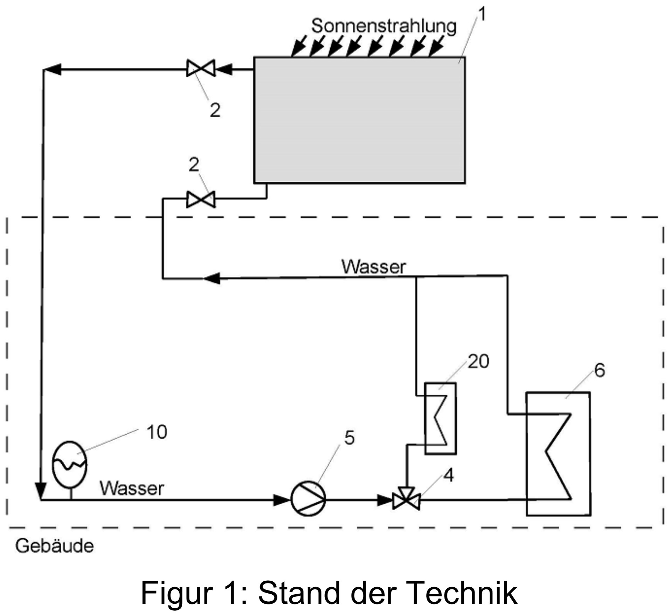

Eine druckbeaufschlagte solarthermische Anlage nach dem Stand der Technik ist in Figur 1 schematisch dargestellt. In einem druckbeaufschlagten geschlossenen Wasserkreislauf wird das Wärmeträgermedium Wasser bzw. ein Wasser-Glykol-Gemisch mit Hilfe einer Pumpe 5 zirkuliert. Das Wärmeträgermedium nimmt hierbei Wärmeenergie im Solarkollektor 1 auf, wodurch es erwärmt wird. Über die Pumpe 5 wird das Wasser in den Wärmetauscher des Brauchwasserspeichers 20 geführt. Hier gibt es Energie in Form von Wärme an den Speicher ab, wobei es sich abkühlt. Wenn die gewünschte Brauchwassertemperatur im Brauchwasserspeicher 20 erreicht ist, wird das Dreiwegeventil 4 umgeschaltet und das Wasser wird durch den Wärmetauscher des Pufferspeichers 6 gepumpt, über welchen das Medium des Heizungssystems erwärmt wird. Danach gelangt das Wasser wieder in den Solarkollektor und wird erneut erwärmt. Neben den Hauptkomponenten sind u.a. noch ein Ausdehnungsgefäß 5 und Absperrorgane 2 an verschiedenen Stellen notwendig.

Drucklose offene Anlagen nach dem Stand der Technik funktionieren ähnlich wie die in Figur 1 dargestellte. Bei drucklosen Anlagen muss jedoch aufgrund der zur Umgebung offenen Bauweise auf die geodätisch richtige Anordnung aller Komponenten geachtet werden (z.B. befinden sich Ausdehnungsgefäße 13 an Hochpunkten), um einen Austritt von Wärmeträgermedium zu verhindern. Weiterhin sind in drucklosen Anlagen die maximal zulässigen Temperaturen des Wärmeträgermediums durch dessen Dampfdruck von ca. 1 bar absolut am höchsten Punkt begrenzt. Die zulässige Temperatur des Wärmetauschermediums muss auch bei der Auswahl der Pumpe 5 berücksichtigt werden, um Kavitation bei den jeweiligen Dampfdrücken zu vermeiden. Der maximale Druck wirkt sich bei drucklosen Anlagen auch auf die Rohrleitungsauslegung aus. Da auf geringe Druckverluste geachtet werden muss, sind größere Querschnitte zu wählen.

Bei drucklosen wie auch druckbeaufschlagten Anlagen nach dem Stand der Technik verbleibt das Wärmeträgermedium dauerhaft in allen Anlagenteilen; der Solarkollektor 1 bleibt dauerhaft gefüllt, wodurch das zirkulierte oder im Stillstand befindliche Wärmeträgermedium im Winter gegen Frost geschützt werden muss. Weiterhin muss die Anlage im Sommer, im Stillstand, auf eine Überhitzung des Solarkollektor 1 ausgelegt sein bzw. es müssen Ausdampfen, Kondensationsschläge und Blockierungen durch Dampfblasen vermieden werden.

Bedingt durch den dauerhaft gefüllten Kollektor zeigt sich hinsichtlich der Wärmeverluste, dass das Wärmeträgermedium bei Anlagen nach dem Stand der Technik im Solarkollektor 1, sowie in den außenliegenden Anlagenteilen, Energie auch im Stillstand an die Umgebung abgibt. Im Stillstand der Anlage ergeben sich hierdurch auch nachts erhebliche Energieverluste. Dies betrifft insbesondere auch offene Vakuumröhrenanlagen, da diese aufgrund ihrer Bauweise ein großes Volumen des Wärmeträgermediums, also ein großes Energiespeichervermögen, im Kollektor selbst aufweisen. Die entstehenden Wärmeverluste resultieren in einer längeren Aufheizphase am darauffolgenden Tag, bevor Nutzenergie aus dem Kollektor 1 gewonnen werden kann.

Neben der dualen Fahrweise bzgl. des Wärmeträgermediums liegen die besonderen Vorteile der Anlage in Folgendem:
Die erfindungsgemäße Anlage verwendet in einer vorteilhaften Ausgestaltung Vakuumröhren, die aufgrund ihrer Bauweise für den dualen Betrieb besonders geeignet sind. Andere Kollektortypen und Vakuumröhren sind für diese Fahrweise weniger gut geeignet. Die Vakuumröhren sind zwar bereits bekannt, jedoch nicht in dieser speziellen Einsatzweise.

Die Drainfahrweise ist einerseits von Vorteil, um den Kollektor zu leeren, um ihn für den Luftbetrieb und somit die duale Fahrweise vorzubereiten, aber andererseits sammelt sie auch die im Kollektor selbst gespeicherte Energie und verlagert diese in das zu beheizende Gebäude. Hierdurch erhöht sich die Ausbeute der am Tage absorbierten Sonnenenergie.

Neben der vorstehenden schriftlichen Beschreibung der Erfindung wird zu deren ergänzender Offenbarung hiermit explizit auf die zeichnerische Darstellung der Erfindung in den Figuren Bezug genommen.

### Bezugszeichenliste

- 1: Solarkollektor, Kollektor
- 2: Ventil, Absperreinrichtung
- 3: Wasserspeicher
- 4: Dreiwegeventil
- *5*: Pumpe
- 6: Wärmetauscher, Wärmesenke, Pufferspeicher
- 7: Gebläse, Lüfter
- 8: Luftfilter
- 9: Dreiwegeventil, Dreiwegeklappe
- 10: Membranausdehnungsgefäß, geschlossen
- 11: Ventil, Absperreinrichtung
- 12: Wasserschleife, Siphon
- 13: Ausdehnungsgefäß, offen
- 14: Hochpunkt
- 15: Spaltrohr
- 16: Prozesswärmenutzer
- 17: Brauchwasserspeicher
- 18: Pufferspeicher
- 19: Entlüftungs-/Belüftungsventil
- 20: Wärmetauscher, Brauchwasserspeicher

## Patentansprüche

1. Solarthermische Anlage mit einem Solarkollektor (1), mindestens einem Wärmeträgermedium, welches Kanäle des Solarkollektors (1) durchströmt, und mit einem mit dem Solarkollektor (1) zum Kreislauf verbundenen Wärmetauscher (6),
wobei ein erster Kreislauf mit einem flüssigen Wärmeträgermedium, insbesondere Wasser mit oder ohne Zusätzen, und ein zweiter Kreislauf mit einem gasförmigen Wärmeträgermedium, insbesondere Luft, vorgesehen sind, und wobei der Betrieb der Anlage in Abhängigkeit vom Wärmebedarf und von der Verfügbarkeit der Solarenergie von dem einen Kreislauf auf den anderen Kreislauf umschaltbar ist,
**dadurch gekennzeichnet,**
**dass** der erste und der zweite Kreislauf miteinander verbunden sind und Ventile (11) oder Hochpunkte (14) aufweisen,
**dass** beide Kreisläufe an dieselben Kanäle des Solarkollektors (1) angeschlossen sind und
**dass** bei druckloser Anlagenauslegung die Hochpunkte (14) so angeordnet sind sowie dass bei druckbeaufschlagter Anlagenauslegung die Ventile (11) so steuerbar sind, dass im Betrieb durch dieselben Kanäle des Solarkollektors (1) entweder das flüssige oder das gasförmige Wärmeträgermedium strömt.

2. Anlage nach Anspruch 1,
**dadurch gekennzeichnet,**
**dass** der Solarkollektor (1) als Vakuumröhrenkollektor ausgestaltet ist und dass die Kanäle des Solarkollektors (1) als beidseitig geöffnete Solarvakuumröhren mit ausreichend großen Strömungsquerschnitten für Gas und für Flüssigkeit ausgebildet sind.

3. Anlage nach Anspruch 1,
**dadurch gekennzeichnet,**
**dass** im zweiten Kreislauf ein Niederdruck-Gebläse oder ein Lüfter (7) zum Fördern des Gases angeordnet ist.

4. Anlage nach Anspruch 1,
**dadurch gekennzeichnet,**
**dass** die Anlage einen zur Umgebung offenen und daher drucklosen ersten Kreislauf aufweist und dass im zweiten Kreislauf zwei Hochpunkte (14) in den Rohrleitungen vor und hinter dem Kollektor (1) angeordnet sind, wobei zumindest bis zu diesen Hochpunkten (14) die Rohrleitung flüssigkeitsdicht ausgelegt ist.

5. Anlage nach Anspruch 4,
**dadurch gekennzeichnet,**
**dass** im ersten Kreislauf ein offenes Ausdehnungsgefäß (13) angeordnet ist.

6. Anlage nach Anspruch 1,
**dadurch gekennzeichnet,**
**dass** im ersten Kreislauf mit dem flüssigen Wärmeträgermedium ein Speicher (3) mit einer Kapazität angeordnet ist, die eine vollständige Entleerung des Solarkollektors (1) bis zu den Kreislaufgrenzen in den Speicher ermöglicht.

7. Anlage nach Anspruch 1,
**dadurch gekennzeichnet,**
**dass** die Anlage Spaltrohre (15) aufweist, die unterhalb von bestehenden Heizkörpern eines Gebäudeheizungssystems anbringbar sind, und die zum Erhitzen der bestehenden Heizkörper mit der aus den Spaltrohren (15) aufsteigenden Luft ausgelegt sind.

8. Anlage nach Anspruch 1,
**dadurch gekennzeichnet,**
**dass** im zweiten Kreislauf ein Prozesswärmenutzer (16) angeordnet ist.

9. Anlage nach Anspruch 6,
**dadurch gekennzeichnet,**
**dass** der Solarkollektor (1) auf gleicher Höhe oder unterhalb des Speichers (3) angeordnet ist und dass der Speicher (3) mit dem druckseitigen Auslass einer Pumpe (5) verbunden ist, welche saugseitig mit dem Solarkollektor (1) verbunden ist.

10. Verfahren zum Betreiben der Anlage nach einem der vorhergehenden Ansprüche,
**dadurch gekennzeichnet,**
**dass** die Anlage im Sommer und Winter überwiegend mit dem gasförmigen Wärmeträgermedium und in den Übergangsjahreszeiten überwiegend mit dem flüssigen Wärmeträgermedium betrieben wird.

11. Verfahren nach Anspruch 10,
**dadurch gekennzeichnet,**
**dass** im Betrieb mit dem flüssigen Wärmeträgermedium und in Zeiten des Anlagenstillstands, insbesondere nachts, das Wärmeträgermedium aus dem Solarkollektor und den außenliegenden Anlagenteilen in einen Speicher entleert wird, der sich innerhalb eines zu beheizenden Gebäudes bzw. Objektes befindet.

12. Verfahren nach Anspruch 10,
**dadurch gekennzeichnet,**
**dass** im Stillstandsbetrieb oder bei Überhitzung die Flüssigkeit entleert und die Anlage im Gasbetrieb heruntergekühlt wird.
